# EUROPEAN PATENT SPECIFICATION

(11) **EP 0 928 387 B1**
(45) Date of publication and mention of the grant of the patent: **21.04.2004**
(21) Application number: 97943601.1
(22) Date of filing: 26.09.1997
(51) Int. Cl.: F16K 21/04, F16K 31/48

(54) **SELF CLOSING FAUCET WITH TIMING MECHANISM**
SELBSTSCHLIESSENDE ARMATUR MIT ZEITSCHALTWERK
ROBINET A FERMETURE AUTOMATIQUE DOTE D'UN MECANISME DE MINUTERIE

(30) Priority: 26.09.1996 US 721288; 04.04.1997 US 825965
(43) Date of publication of application: 14.07.1999
(73) Proprietor: MASCO CORPORATION, Taylor, MI 48180 (US)
(72) Inventor: NELSON, Alfred, C., Noblesville, IN 46060 (US); BRYM, Stanley, J., Torrington, CT 06790 (US); LUMB, Gunther, H., Collinsville, CT 06022 (US)
(74) Representative: Wharton, Peter Robert
(86) International application number: PCT/US1997/017303
(87) International publication number: WO 1998/013632

(56) References cited:
- DE-A- 2 847 751
- DE-A- 4 341 620
- DE-U- 8 220 565
- US-A- 2 098 815
- US-A- 3 063 297
- US-A- 3 807 451

## Description

### TECHNICAL FIELD

The field of this invention relates to a faucet having a timing mechanism which automatically shuts off the flow of water therethrough.

### BACKGROUND OF THE DISCLOSURE

In recent years, water conservation has taken on increased importance. Many cities and states have passed ordinances dealing with water conservation. Some ordinances relate to the automatic shutting off of faucets that are in public lavatories.

Previous timing devices may have complicated mechanisms that add cost to the faucet valve. The added expense is caused by one spring mechanism for closing the faucet valve and a separate second spring mechanism for driving the escapement device that times the closing of the faucet.

Additional faucet standards have been developed to assure all people, including small children and people with physical disabilities, have full accessibility to public lavatories. One of these standards is directed to the ease of turning on a faucet. For ease of operation, a faucet needs a handle that is shaped to be easily manipulated and operated.
Furthermore, the force needed to turn on the handle to the open or on position must not be more that five (5) pounds to assure that the most operators can easily open the faucet and have access to water.

However with many faucets, the manipulation required to open the faucet is different than the manipulation required to close the faucet; i.e., the open motion may be different and easier than the closing motion. For example with blade handles, the opening force may be a pushing motion that is much easier than the reverse pulling motion of the blade for closing the faucet.

A self closing faucet however alleviates the need for manually manipulating the faucet handle to a closed position. The most common way for providing a self closing faucet that incorporates a spring loaded timing mechanism that moves the handle to the closed position.

Previous efforts to simplify the timing mechanism produced handles that were difficult to manipulate and gearing mechanisms that were needlessly driven therefore having premature wear. Secondly, previous faucets could be stuck in an on or full flow position if there was failure of the gearing mechanism and it seized up.

What is needed is a durable automatic faucet that is both easy to operate and provides for automatic shutting off of the water and an overriding manual closure capability.

DE-U-8220265 discloses a self-closing stop valve the main valve of which is pilot-operated by means of a handle-actuated auxiliary valve and which is fitted with a time switch for time-delayed closing of the auxiliary valve, the auxiliary valve being opened and the time switch being activated by actuation of the handle in the opening direction and the auxiliary valve being closable before the expiry of the pre-set run-time of the time switch by actuation of the handle in the closing direction, characterised by a slave element for activating the time switch, which slave element is actuated by the handle and has free return motion when the handle is actuated in the closing direction.

The invention is defined in claim 1.

Preferred embodiments of the invention are defined in the dependent claims.

In this fashion, a sturdy, simple and reliable faucet valve with a concealed self closing timing mechanism provides for automatic closure of the valve, optional manual closure of the valve, and easy low torque opening of the valve.

### BRIEF DESCRIPTION OF THE DRAWINGS

Reference now is made to the accompanying drawings in which:
Figure 1 is a perspective view of a two handle faucet of one embodiment of the instant invention;
Figure 2 is a cross-sectional view through the handle taken along line 2-2 in figure 1;
Figure 3 is an exploded perspective view illustrating the mounting elements that mount the timer housing assembly to the faucet valve body;
Figure 4 is an exploded perspective and partially segmented view of the internal parts of the timer housing assembly with the cover removed;
Figure 5 is a cross-sectional view taken along line 5-5 in figure 2;
Figure 6 is a cross-sectional view taken along line 6-6 in figure 2; and
Figure 7 is a cross-sectional view taken along line 7-7 in figure 2.

### DETAILED DESCRIPTION OF THE PREFERRED EMBODIMENT

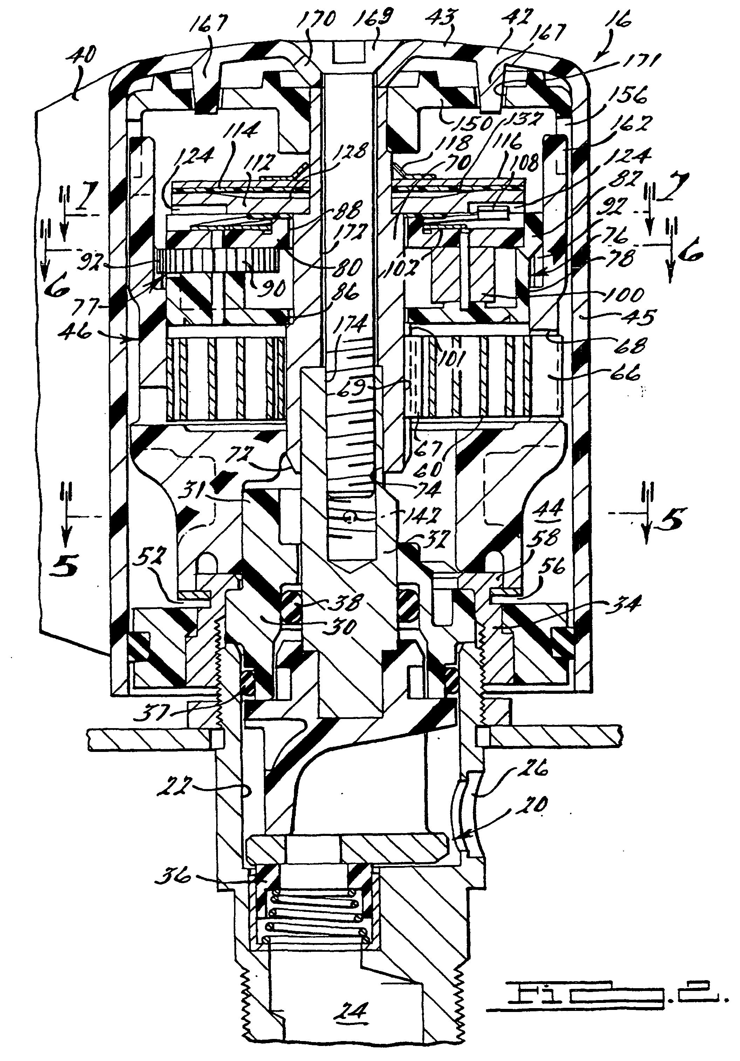

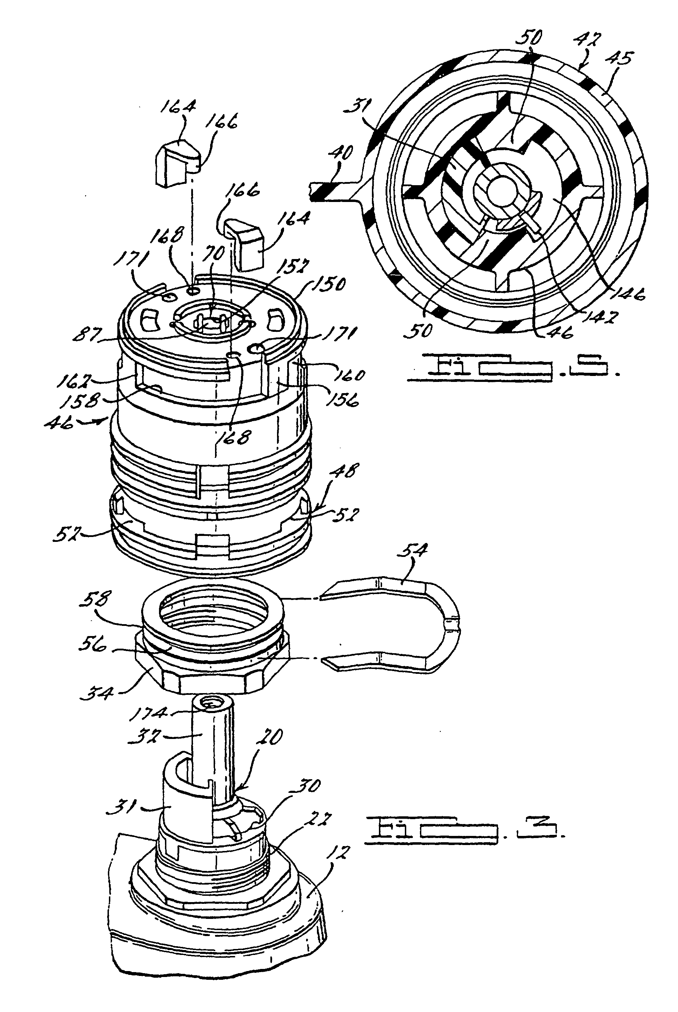

In the embodiment illustrated in figures 1 and 2, a self closing faucet 10 includes a faucet body 12 with a spout 14, and a hot handle 16 and cold handle 18 mounted on the faucet body. The hot and cold handles 16 and 18 and the respective internal valve and timing mechanisms are substantially identical and hence only the hot side is illustrated in detail with the understanding that the cold side has the same or mirrored image structure.

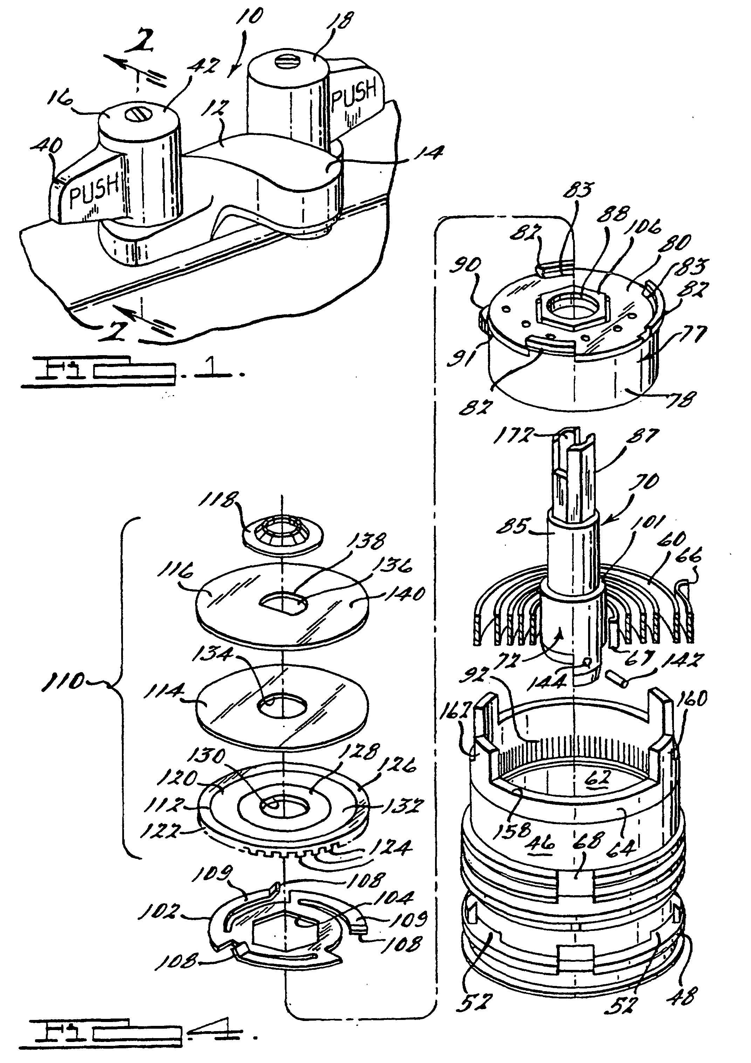

As shown in figure 2, rotatable valve element 20 is conventionally mounted in valve chamber 22 of body 12 for rotation between a closed and open position for allowing and shutting off fluid flow from the inlet 24 to the outlet 26. The valve chamber 22 is conventionally closed at its upper end 28 as shown in figures 2 and 3 with a valve stop and closure member 30. The closure member 30 has an upper extending portion 31. The valve element 20 is non-rotatably affixed to a control stem 32 that extends through the valve stop and cover member 30 also in a conventional fashion. A retaining nut 34 retains the valve stop and closure member 30 in place. Conventional seals 36, 37 and 38 seal off the valve chamber and prevent the faucet from leaking.

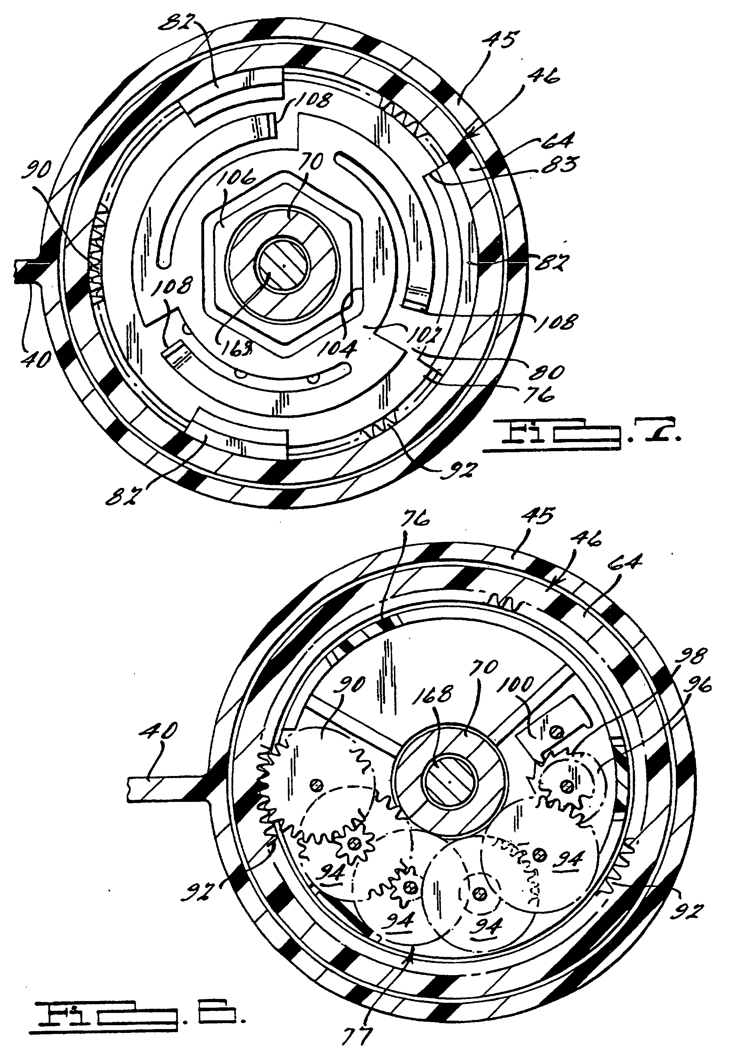

The handle 16 comprises a blade section 40 and a shell portion 42. Shell portion 42, as best illustrated in figure 2, is hollow with a top 43 and downwardly depending side wall 45 forming a cavity 44 open at its bottom and fits over and conceals a timer housing assembly 46. The timer housing assembly 46, as shown in figures 2 and 3, has a bottom section 48 constructed to receive the upper extending portion 31 of stop 30 between its two inwardly extending shoulders 50 as shown in figure 5 to assure correct angular orientation of the housing assembly 46 on body 12. The bottom section 48 has two slots 52 therethrough that receive a bayonet spring clip 54 which also engages an external circumferential groove 56 in the retaining nut 34 and axially retained by the top flange 58 above the groove 56.

Reference now is made to figures 2 and 4 where a coil spring 60 is disposed in a bore 62 in the upper portion 64 of timer housing 46. Outer end 66 of coil spring 60 is secured to the upper portion 64 within peripheral slot 68 of the housing 46, while inner end 67 of the spring 60 is anchored in slot 69 in an arbor shaft 70.

The lower end 72 of arbor shaft 70 is non-rotatably affixed to the control stem 32. One common way to nonrotatably mount the arbor is to have the control stem 32 have a D-shaped cross section and the lower end of the arbor having a complementary D-shaped receiving bore 74.

An escapement case 76 is disposed in the upper portion 64 of the housing 46 and about the arbor shaft 70. The escapement case 76 is comprised of a cylindrical wall section 78 and a top cover section 80. The top cover 80 is radially retained in position with respect to the wall 78 by a plurality of upwardly extending tabs 82 from the wall 78 engaging notches 83 in the top. The top tabs 82 extend radially outwardly which positions the case 76 coaxially within bore 62 of housing 46. Respective aligned central openings 86 and 88 are provided in case 76 and top cover 80 to rotatably receive a central section 85 of arbor shaft 70 such that the top section 87 of arbor 70 extends through and above the escapement case 76.

As best illustrated in figures 2 and 6, disposed within the case 76 is the timer escapement mechanism 77 comprised of idler gear 90 rotatably mounted in the escapement case. The gear 90 extends through an aperture 91 in the side of the case 76 so that idler gear 90 engages and meshes with ring gear 92. The ring gear 92 is integrally formed in the upper section 64 of housing 46 about the central bore 62 that houses the case 72.

A series of pinion and wheel gears 94 are rotatably mounted in a series, i.e. in a train, within the housing 72 arcuately about the central opening 86. The other end of the series of gears has an escape wheel 96 with appropriately tapered teeth 98. The teeth 98 engage a clutter 100 that toggles back and forth to provide a controlled rotation of the gears as idler gear circumferentially travels about the ring gear 92 from torsional force exerted on the escapement casing as described later. Axially downward movement of escapement case 76 on arbor 70 is prevented by shoulder 101 on arbor 70 which has a greater diameter than opening 86 in the bottom of case 76 to prevent interference with the coil spring 60.

Referring now to figures 2, 4 and 7, a ratchet 102 is disposed on top cover 80 of escapement case 76. As best shown in figure 4, the ratchet has a central polygonal shaped opening 104 that non-rotatably engages a complementary shaped embossment 106 about opening 88 in cover 80. Ratchet 102 is thus prevented from rotating independently of escapement case 76; i.e. ratchet 102 and housing 70 rotate together. Above ratchet 102 is disposed a friction or slip clutch assembly 110. The ratchet has upwardly canted spring biased distal teeth 108 at the end of resilient spring fingers 109 that upwardly extend to engage the slip clutch assembly 110 as described in more detail as follows.

The slip clutch assembly 110 includes a ratchet disc 112, friction disc 114, spring washer 116 and push nut clip 118. The ratchet disc 112 has a top surface 120 and a bottom toothed surface 122. The bottom toothed surface 122 has a plurality of grooves 124 that are constructed to receive the distal teeth 108 at the end of finger 109. The engagement cant of the teeth 108 with the grooves 124 is such that it allows as shown in figure 4 counterclockwise rotation of the ratchet 102 with respect to the ratchet disc 112 by allowing the teeth 108 to bias downwardly and exit grooves 124 but prevent clockwise rotation of the ratchet 102 with respect to the ratchet disc 112.

The top surface 120 has a flat radially outer annular shaped circumferential section 126 and a flat radially inner section 128 which is lower than section 126. A circular aperture 130 extends through the center of disc 112 to rotatably receive the upper section 87 of arbor 70. A canted intermediate section 132 joins sections 126 and 128.

Friction disc 114 is a flexible teflon layer of material with a central aperture 134 to allow the arbor section 87 to extend therethrough. Spring disc 116 has a central aperture 136 shaped to non-rotatably engage the upper section 87 of arbor 70 i.e. it always rotates with arbor 70. The push nut 118 is pushed downwardly onto the arbor section 87 to spring load the disc 116 by pushing the center section 138 about aperture 136 lower than its periphery 140 such that its provides an axially directed force onto the ratchet disc 112. The teflon layer 114 controls the slippage or the torsional force needed on the arbor 70 to cause the spring disc 116 to slip with respect to the ratchet disc 112.

For shipping purposes, a pin 142 extends into a side aperture 144 and as shown in phantom in figures 2 and 5 radially extends into a cavity 146 in the lower section 48 of the housing below a flange 148 to prevent the arbor 70 and the retained escapement case 76, ratchet 102 and clutch assembly 110 from axially leaving the housing 46.

Referring back to figures 2 and 3, the housing assembly 46 includes a rotatable cover member 150 that has a central mounting aperture 152 that non-rotatably sits on arbor section 87 to rotate therewith.
The periphery 154 of the cover member 150 includes two downwardly depending flanges 156 that arcuately move in notch 158 at the upper end of the housing assembly 46 between off stop 160 and full on stop 162. The rotational stroke from full off to full on may be shortened by the addition of two removable inserts 164 that can abut the full on stop 162. The inserts 164 may be mounted by having a cylindrical depending peg 166 fitted into aperture 168 in cover 150.

The handle 16 has its shell section 42 fitted over the timer housing 46 and is correctly positioned by the insertion of two downwardly depending pins 167 fitted into apertures 171 in cover 150. A bolt 169 fits through central aperture 170 in the shell 42 and through central aperture 172 in arbor 70. The bolt 169 engages threaded aperture 174 in stem 32 to retain the handle assembly together.

In operation, the blade is pushed to rotate the handle in a clockwise rotation as illustrated. This motion turns the hot valve on. The clockwise rotation of handle 16 also winds the spring 60. The clockwise rotation of the arbor 70 also rotates the spring disc 116 and through friction provided through the teflon layer 14 rotates the ratchet disc 112. However, the ratchet 102 does not rotate because the teeth 108 are released from the grooves 124. Hence, the mechanism 77 in escapement case 76 remain inactive and the gears do not spin during the turning on of faucet handle 16.

Upon release of the handle 16 after it is rotated on, the torsional force of the wound spring 60 biases the arbor in the counterclockwise direction toward the off position. As the arbor turns, the spring disc turn therewith and through friction also turns the rachet disc 112 counterclockwise. The ratchet disc is locked with the ratchet 102 during the counterclockwise rotation due to the engagement with teeth 108. The ratchet through aperture 104 drives the entire escapement case 76 and sets the escapement mechanism 77 in action. The idler wheel 90 by being in engagement with ring gear 92 provides a slow counterclockwise rotation of the arbor to the closed rotation through the well known action of the gears 94, release wheel 96 and clutter 100 of the escapement mechanism 77.

The span between the flange from abutting full on limit 162 to the time it abuts the off limit 160 can be set to approximately fifteen seconds. The inclusion of inserts 164 will shorten the time because of the shorter stroke to approximately ten seconds. Other time periods can be easily constructed by changing the gearing of the escapement mechanism 77 in the escapement case or by further lengthening or shortening the arc of rotation of the handle 16.

Normally, the escapement mechanism, driven by the force of spring 60 moves the faucet handle 16, arbor 70, and thus valve element 20 from the full on or open position to the full off or closed position by itself in the above described slow release through the escapement mechanism.

If one however wishes to close the faucet more quickly, one merely pulls on blade 40 to rotate the handle in the counterclockwise direction. The counterclockwise torsional force exerted on the handle and thus the arbor will cause the clutch 110 to slip with disc 116 moving with respect to disc 112 thus unwinding the spring 60 and moving the handle, arbor and valve to the closed position without the escapement mechanism from fully functioning. The friction clutch 110 also provides a convenient backup function by allowing manual closing of the faucet valve in the event that the escapement mechanism 77 seizes or the spring 60 breaks while the faucet valve is in the on position.

The friction forces provided by the clutch 110 are greater than the torsional forces needed to release the ratchet teeth 108 from the disc 112 when the faucet is turned on. This allows the ratchet 102 to function and release the escapement mechanism from the arbor when the handle is moved to the on position. The friction forces provided by the clutch 110 are also higher than the closing torsional forces provided by the spring 60 which allows the escapement mechanism 77 to work through the clutch 110 and close the handle 16 without slippage while still allowing the option of slippage upon additional manual exerted torsional force on the handle to quickly turn off the faucet.

All the above functions are incorporated into a faucet that uses rotational motion to close and open the faucet. The entire timer housing assembly 46 with its components is concealed in a faucet blade handle that moves between a closed and on position in an innately intuitive fashion.

Variations and modifications are possible without departing from the scope of the present invention as defined by the appended claims.

## Claims

1. A self closing faucet valve comprising:
a fixed housing assembly (46) having a generally cylindrical bore (62), said housing assembly having a water inlet (24) and water outlet (26);
a rotatable arbor (70) connected to a valve element (20) and a manually operable handle (16), said valve element being rotatably movable by said handle between an open position and closed position in said fixed housing with respect to one of said inlet (24) and outlet (26);
a spring (60) mounted within said bore (62) and operably between said valve housing and said arbor (70) such that it exerts a torsional force on said arbor toward the off position when said arbor is rotated to said open position;
an escapement mechanism (77) positioned within said bore (62) and having a first gear (90) being engaged to a ring gear (92) in said fixed housing assembly and at least one more gear operably engaged to said first gear and a clutter mechanism (100) for controlling rotation of said gears from said bias force of said spring (60) on said arbor;
a friction clutch assembly (110) and a ratchet device (102) being positioned within said bore and being operably interposed between said arbor (70) and said fixed housing assembly;
said ratchet constructed for providing a release of said arbor (70) with respect to said fixed housing assembly when said arbor is manually rotated toward said open position such that said gears (90,92) in the escapement mechanism are not operated during rotation of said arbor toward the open position; **characterised by**
said friction clutch (110) being constructed to provide sufficient adherence greater than the closing torque provided by said spring (60) to allow said escapement mechanism to be engaged with said arbor (70) and retard closing motion of the valve when said spring biases said valve (20) and arbor toward said closed position and allows slippage of said escapement device with respect to one of fixed housing and said arbor upon additional manual closing torque being exerted upon said handle (16) by an operator.

2. A faucet valve as defined in claim 1 further **characterised by**:
said spring (60) being a coil spring coaxially mounted about said arbor (70) within said bore (62) and having an outer end (66) connected to said housing (46) and an inner end (67) connected to said arbor;
said escapement mechanism includes a case (76) coaxially mounted about said arbor (70);
said ratchet (102) being affixed to said escapement case; and
said friction clutch assembly (110) being interposed between said arbor and said escapement case.

3. A faucet valve as defined in claim 2 further **characterised by**:
said ratchet (102) includes a plate mounted onto said escapement case (76) for non-rotation therewith;
said plate includes a plurality of circumferentially extending resiliently biased fingers (109) having inclined ends which engage radially extending grooves (124) in one side of a disc that forms part of said friction clutch assembly.

4. A faucet valve as defined in claim 3, further **characterised by**:
said handle (16) having a cylindrical side wall (45) downwardly extending to define a cavity (44) such that said escapement case, said coil spring, said friction clutch assembly and said housing all fit within and are concealed within said cavity of said handle.

5. A faucet valve as defined in claim 4, further **characterised by**:
said arbor (70) being non-rotatably affixed to a top cover plate (80) that includes a first stop (160) that abuts open and closed limit shoulders on said fixed housing assembly;
a removable second stop (162) member being mountable on said cover plate (88) for causing a shorter open stroke of said handle when said second stop member abuts said open limit shoulder.

6. A faucet valve as claimed in any of claims 1 to 5, further **characterised by** the several gears (94) being engaged in a train to one another and having an end gear being engaged to a ring gear (92) positioned in said bore of said fixed housing for rotating said escapement device (77) with respect to said housing.

7. A faucet valve timer closure assembly including a faucet valve as claimed in any of claims 1 to 6.

8. A faucet valve timer closure assembly as defined in claim 7, further **characterised by**:
said housing assembly (46) having a bottom end constructed to be attachable to an upper end of a faucet valve body (12) and allowing a control stem of said faucet valve to extend into said fixed housing and be operably affixed to said rotatable arbor (70).

9. A self closing faucet valve as defined in claims 1 to 6, further **characterised by**:
a timer housing assembly (46) retained onto said valve stop and cover member by a clip (54) which passes through a slot in a bottom section (48) of said timer housing assembly and also engages a slot (52) in said cover nut (34).

## Patentansprüche

1. Selbstschließender Wasserhahn, der folgendes aufweist:
eine feststehende Gehäuseanordnung (46), die eine allgemeln zylindrische Bohrung (62) hat, wobei die Gehäuseanordnung einen Wassereinlaß (24) und einen Wasserauslaß (26) hat;
einen drehbaren Schaft (70), der mit einem Absperrelement (20) und einem manuell betätigbaren Griff (16) verbunden ist, wobei das Absperrelement von dem Griff zwischen einer offenen Position und einer geschlossenen Position in dem feststehenden Gehäuse in bezug auf einen von dem Einlaß (24) und dem Auslaß (26) drehbewegbar ist;
eine Feder (60), die in der Bohrung (62) angebracht und zwischen dem Gehäuse des Wasserhahns und dem Schaft (70) so betätigbar ist, daß sie auf den Schaft in AUS-Positionsrichtung eine Drehkraft aufbringt, wenn der Schaft in die offene Position gedreht wird;
eine Hemmeinrichtung (77), die in der Bohrung (62) positioniert ist und hat: ein erstes Zahnrad (90), das mit einem Zahnkranz (92) in der feststehenden Gehäuseanordnung in Eingriff ist, und mindestens ein weiteres Zahnrad, das mit dem ersten Zahnrad betriebsmäßig in Eingriff ist, und eine Umschalteinrichtung (100), um die Drehung der Zahnräder aufgrund der auf den Schaft aufgebrachten Vorspannkraft der Feder (60) zu steuern;
eine Reibungskupplungsanordnung (110) und eine Sperreinrichtung (102), die in der Bohrung positioniert und zwischen dem Schaft (70) und der feststehenden Gehäuseanordnung betriebsmäßig angeordnet sind;
wobei die Sperreinrichtung so ausgebildet ist, daß sie eine Freigabe des Schafts (70) in bezug auf die feststehende Gehäuseanordnung ermöglicht, wenn der Schaft manuell in Richtung der offenen Position gedreht wird, so daß die Zahnräder (90, 92) in der Hemmeinrichtung während der Drehung der Schaft in Richtung der offenen Position nicht betätigt werden; **dadurch gekennzeichnet, daß**
die Reibungskupplung (110) so ausgebildet ist, daß sie eine ausreichende Haftung ermöglicht, die größer als das von der Feder (60) aufgebrachte Schließdrehmoment ist, um zu ermöglichen, daß die Hemmeinrichtung mit dem Schaft (70) in Eingriff gelangt und die Schließbewegung des Ventilelements verzögert, wenn die Feder das Absperrelement (20) und den Schaft in Richtung der geschlossenen Position vorspannt, und ein Gleiten der Hemmeinrichtung in bezug auf eines von dem feststehenden Gehäuse und den Schaft ermöglicht, wenn von einem Bediener ein zusätzliches manuelles Schließdrehmoment auf den Griff (16) aufgebracht wird.

2. Wasserhahn nach Anspruch 1, ferner **dadurch gekennzeichnet, daß**
die Feder (60) eine Schraubenfeder ist, die koaxial um den Schaft (70) herum in der Bohrung (62) angebracht ist und ein äußeres Ende (66), das mit dem Gehäuse (46) verbunden ist, und ein inneres Ende (67) hat, das mit dem Schaft verbunden ist;
die Hemmeinrichtung ein Gehäuse (76) aufweist, das koaxial um den Schaft (70) herum angebracht ist;
die Sperreinrichtung (102) an dem Hemmeinrichtungsgehäuse befestigt ist; und
die Reibungskupplungsanordnung (110) zwischen dem Schaft und dem Hemmeinrichtungsgehäuse angeordnet ist.

3. Wasserhahn nach Anspruch 2, ferner **dadurch gekennzeichnet, daß**
die Sperreinrichtung (102) eine Platte aufweist, die auf dem Hemmeinrichtungsgehäuse (76) damit nicht drehbar angebracht ist;
die Platte eine Vielzahl von sich in Umfangsrichtung erstreckenden federnd vorgespannten Fingern (109) aufweist, die geneigte Enden haben, die mit sich radial erstreckenden Nuten (124) in einer Seite einer Scheibe in Eingriff sind, die Teil der Reibungskupplungsanordnung bildet.

4. Wasserhahn nach Anspruch 3, **dadurch gekennzeichnet, daß**
der Griff (16) eine zylindrische Seitenwand (45) hat, die sich so nach unten erstreckt, daß sie einen Hohlraum (44) definiert, so daß das Hemmeinrichtungsgehäuse, die Schraubenfeder, die Reibungskupplungsanordnung und das Gehäuse sämtlich hineinpassen und in dem Hohlraum des Griffs verdeckt sind.

5. Wasserhahn nach Anspruch 4, **dadurch gekennzeichnet, daß**
der Schaft (70) nicht drehbar an einer oberen Abdeckplatte (60) befestigt ist, die einen ersten Anschlag (160) aufweist, der an Offenposition- und Geschlossenposition-Begrenzungsschultern an der feststehenden Gehäuseanordnung anliegt;
ein entfernbares zweites Anschlagelement (162) an der Abdeckplatte (80) anbringbar ist, um einen kürzeren Öffnungshub des Griffs zu bewirken, wenn das zweite Anschlagelement an der Offenposition-Begrenzungsschulter anliegt.

6. Wasserhahn nach einem der Ansprüche 1 bis 5, ferner **dadurch gekennzeichnet, daß** die verschiedenen Zahnräder (94) in einem Zahnräderzug mit einander in Eingriff sind und ein Endzahnrad haben, das mit einem Zahnkranz (92) in Eingriff ist, der in der Bohrung des feststehenden Gehäuses positioniert ist, um die Hemmeinrichtung (77) in bezug auf das Gehäuse zu drehen.

7. Zeitgesteuerte Wasserhahn-Schließanordnung, die einen Wasserhahn nach einem der Ansprüche 1 bis 6 aufweist.

8. Zeitgesteuerte Wasserhahn-Schließanordnung nach Anspruch 7, ferner **dadurch gekennzeichnet, daß**
die Gehäuseanordnung (46) ein unteres Ende hat, das so ausgebildet ist, daß es an einem oberen Ende eines Wasserhahnkörpers (12) anbringbar ist, und das ermöglicht, daß sich ein Steuerschaft des Wasserhahns in das feststehende Gehäuse erstreckt und an dem drehbaren Schaft (70) betätigbar befestigt ist.

9. Selbstschließender Wasserhahn nach den Ansprüchen 1 bis 6, ferner **gekennzeichnet durch**
eine Zeitsteuerungs-Gehäuseanordnung (46), die auf dem Anschlag des Absperrorgans und dem Abdeckelement von einem Clip (54) gehalten wird, der einen Schlitz in einem unteren Abschnitt (48) der Zeitsteuerungs-Gehäuseanordnung durchsetzt und ferner mit einem Schlitz (52) in der Abdeckungsmutter (34) in Eingriff ist.

## Revendications

1. Robinet à fermeture automatique comprenant :
une structure de logement fixe (46) ayant un alésage généralement cylindrique (62), ladite structure de logement comportant une entrée d'eau (24) et une sortie d'eau (26) ;
un arbre rotatif (70) connecté à un élément de robinet (20) et à une clef à actionnement manuel, ledit élément de robinet pouvant être déplacé de manière rotative par ladite clef entre une position ouverte et une position fermée dans ledit logement fixe par rapport à ladite entrée (24) et à ladite sortie (26) ;
un ressort (60) monté à l'intérieur dudit alésage (62) et engagé de manière actionnable entre ledit logement de robinet et ledit arbre (70) de sorte à exercer une force de torsion sur ledit arbre vers la position fermée lorsque ledit arbre est pivoté vers la position ouverte ;
un mécanisme d'échappement (77) positionné dans ledit alésage (62) et ayant un premier engrenage (90) en prise avec une couronne (92) dans ladite structure de logement fixe et au moins un engrenage supplémentaire engagé de manière actionnable avec ledit premier engrenage et un mécanisme de contrainte (100) destiné à régler la rotation desdits engrenages conférée par ladite force de déviation dudit ressort (60) sur ledit arbre ;
un ensemble d'embrayage à friction (110) et un encliquetage à rochet (102) positionné à l'intérieur dudit alésage et étant interposé de manière actionnable entre ledit arbre (70) et ladite structure de logement fixe ;
ledit rochet étant conçu pour apporter un dégagement dudit arbre (70) par rapport à ladite structure de logement fixe lorsque ledit arbre est manuellement pivoté vers ladite position ouverte de manière à ce que lesdits engrenages (90, 92) dans le mécanisme d'échappement ne soient pas actionnés pendant le pivotement dudit arbre vers la position ouverte ; **caractérisé en ce que**
ledit embrayage à friction (110) est conçu pour apporter une adhérence suffisante supérieure au couple de fermeture appliqué par ledit ressort (60), pour permettre audit mécanisme d'échappement de se mettre en prise avec ledit arbre (70) et retarder le mouvement de fermeture du robinet lorsque ledit ressort fait dévier ledit robinet (20) et l'arbre vers ladite position fermée et permet le patinage dudit dispositif d'échappement par rapport au logement fixe et audit arbre suite à un couple supplémentaire de fermeture manuelle appliqué sur ladite clef (16) par un opérateur.

2. Robinet selon la revendication 1, **caractérisé en outre en ce que** :
ledit ressort (60) étant un ressort à enroulement monté de manière coaxiale autour dudit arbre (70) à l'intérieur dudit alésage (62) et ayant une extrémité externe (66) reliée au dit logement (46) et une extrémité interne (67) reliée audit arbre ;
ledit mécanisme d'échappement comprend un boîtier (76) monté de manière coaxiale autour dudit arbre (70) ;
ledit rochet (102) étant attaché audit boîtier d'échappement ; et
ledit ensemble d'embrayage à friction (110) étant interposé entre ledit arbre et ledit boîtier d'échappement.

3. Robinet selon la revendication 2, **caractérisé en outre en ce que** :
ledit rochet (102) comprend une plaque montée sur ledit boîtier d'échappement (76) pour empêcher la rotation avec celui-ci ;
ladite plaque comprend une pluralité de doigts obliquant de manière élastique s'étendant de manière circonférentielle (109) ayant des extrémités inclinées qui se mettent en prise avec des rainures s'étendant de manière radiale (124) sur une face d'un disque qui fait partie de l'ensemble d'embrayage à friction.

4. Robinet selon la revendication 3, **caractérisé en outre en ce que** :
ladite clef (16) a une paroi latérale cylindrique (45) s'étendant vers le bas pour définir une cavité (44) telle que ledit boîtier d'échappement, ledit ressort à enroulement, ledit ensemble d'embrayage à friction et ledit logement y tiennent et soient dissimulés à l'intérieur de ladite cavité de ladite poignée.

5. Robinet selon la revendication 4, **caractérisé en outre en ce que** :
ledit arbre (70) est fixé de manière non rotative à une plaque de couvercle (80) qui comprend une première butée (160) qui bute contre des épaulements de limite d'ouverture et de fermeture sur ledit ensemble de logement fixe ;
un second élément de butée amovible (162) pouvant être monté sur ladite plaque de couvercle (88) pour raccourcir la course d'ouverture de ladite clef lorsque ledit second élément de butée bute contre ledit épaulement de limite d'ouverture.

6. Robinet selon l'une quelconque des revendications 1 à 5, **caractérisé en outre en ce que** les multiples engrenages (94) sont en prise les uns avec les autres pour former un train de roue et **en ce qu'**un engrenage d'extrémité est en prise avec une couronne (92) positionnée dans ledit alésage dudit logement afin de faire pivoter ledit dispositif d'échappement (77) par rapport au dit logement.

7. Ensemble de fermeture à minuterie de robinet comprenant un robinet selon l'une quelconque des revendications 1 à 6.

8. Ensemble de fermeture à minuterie de robinet selon la revendication 7, **caractérisé en outre en ce que** ladite structure de logement (46) a une extrémité inférieure conçue de manière à pouvoir être fixée à une extrémité supérieure d'un corps de robinet (12) et permettant à une tige de manoeuvre dudit robinet de s'étendre dans ledit logement fixe et d'être fixée de manière actionnable audit arbre rotatif (70).

9. Robinet à fermeture automatique selon l'une quelconque des revendications 1 à 6, **caractérisé en outre en ce qu'**une structure de logement de minuterie (46) maintenu sur ladite butée de clef et sur ledit élément de couvercle par un étrier (54) qui passe à travers une fente dans une section inférieure (48) de ladite structure de logement de minuterie et qui se met également en prise avec une fente (52) dans ledit écrou de couvercle (34).
